# EUROPEAN PATENT APPLICATION

(11) **EP 2 960 828 A1**
(43) Date of publication of application: **30.12.2015**
(21) Application number: 15171613.1
(22) Date of filing: 11.06.2015
(51) Int. Cl.: G06K 9/00

(54) **FACE AUTHENTICATION DEVICE AND FACE AUTHENTICATION METHOD**

(30) Priority: 26.06.2014 JP 2014131594
(71) Applicant: OMRON CORPORATION, Kyoto-shi, Kyoto 600-8530 (JP)
(72) Inventor: Matsunaga, Jumpei, Kyoto-shi, Kyoto 600-8530 (JP); Irie, Atsushi, Kyoto-shi, Kyoto 600-8530 (JP)
(74) Representative: Kilian Kilian & Partner

(57) **Abstract**

High-reliability face authentication is performed at low processing cost. A face authentication device includes: a face image acquisition unit configured to continuously acquire face images of a user; a user identification unit configured to identify the user based on a first face image acquired by the face image acquisition unit; a parameter acquisition unit configured to acquire a face parameter based on a second face image acquired by the face image acquisition unit, the face parameter being a parameter associated with a facial expression or a face direction of the user; a tracking unit configured to extract a region of a part of a face included in the first face image, and to track the region between the plurality of continuously-acquired face images; and an authentication unit configured to make a determination of successful authentication when the user identified by the user identification unit is a registered user, when the acquired face parameter satisfies a predetermined condition, and when the extracted region is continuously tracked between the plurality of face images.

## Description

### CROSS-REFERENCE TO RELATED APPLICATION

This application is based on Japanese Patent Application No. 2014-131594 filed with the Japan Patent Office on June 26, 2014, the entire contents of which are incorporated herein by reference.

### FIELD

The present invention relates to a device that authenticates a user based on a face image.

### BACKGROUND

Nowadays, a device that identifies a person based on an image (face image) in which a face of the person is photographed is becoming widespread. For example, a feature amount is previously extracted from a face image of an authorized person, and is compared with a feature amount extracted from the acquired face image, which allows the person to be identified based on the face image.

On the other hand, by reading the face image (such as a photograph) of the authorized person, an unauthorized person impersonating as the authorized person may pass the authentication. Therefore, in the field of face authentication, prevention of impersonation becomes a major problem.

For example, in a face authentication method described in U. S. Patent No. 8457367, a plurality of face images are acquired, the authentication is performed a plurality of times using the plurality of face images, and a determination of an authorized user is made when all the face images are authenticated. Therefore, because the authentication can be performed a plurality of times using different facial expressions such as blankness for a first time and smile for a second time, resistance against attack can be enhanced in which a face photograph of the authorized user is previously prepared.

According to the description of U. S. Patent No. 8457367, security can be enhanced compared with the authentication in which only one face image is used. However, because the authentication of a person in question based on the face image involves complicated processing, there is a problem in that processing cost increases when the number of authentication times is increased to enhance the security.

In the face authentication, because the comparison is performed by quantifying a feature of the face, the feature of the face cannot correctly be read in the state where the user makes the facial expression, namely, the state where the user strengthens muscles of facial expression, and sometimes a determination of mismatch is made for even the authorized user. That is, there is a problem in that a rate of failed authentication increases compared with the usual face authentication.

### SUMMARY

The present invention has been made in view of the above problems, and an object of the present invention is to provide a technique of performing high-reliability face authentication at low cost.

To solve the above problems, in accordance with one aspect of the present invention, a face authentication device includes: a face image acquisition unit configured to continuously acquire face images of a user; a user identification unit configured to identify the user based on a first face image acquired by the face image acquisition unit; a parameter acquisition unit configured to acquire a face parameter based on a second face image acquired by the face image acquisition unit, the face parameter being a parameter associated with a facial expression or a face direction of the user; a tracking unit configured to extract a region of a part of a face included in the first face image, and to track the region between the plurality of continuously-acquired face images; and an authentication unit configured to make a determination of successful authentication when the user identified by the user identification unit is a registered user, when the acquired face parameter satisfies a predetermined condition, and when the extracted region is continuously tracked between the plurality of face images.

The face authentication device of the present invention acquires the plurality of face images, and authenticates the user using the plurality of face images.

The face image acquisition unit acquires the face image of the user. For example, the face image acquisition unit acquires the face image from a camera connected to an outside. It is not always necessary to directly acquire the face image from the camera. For example, the face image may be acquired from another system such as an entry management system. The face image acquisition unit can acquire the plurality of face images as the continuous frames.

The first face image is used to identify whether the face included in the image is the face of the authorized user (registered user). For example, the user identification unit identifies the face included in the first face image using a well-known technique.

The second face image is used to read the parameter (face parameter) associated with the facial expression or the face direction of the user. For example, the face parameter may be the parameter indicating a degree of a specific facial expression or the parameter indicating the face direction. The facial expression may not necessarily express emotion as long as the facial expression is associated with an appearance of the face. For example, the face parameter may be the parameter indicating a degree of shutting an eye or a degree of opening a mouth.

For example, the parameter acquisition unit acquires the face parameter corresponding to the face included in the second face image using a well-known technique. The second face image may be a plurality of images.

The tracking unit tracks the region of the part included in the acquired face image between the plurality of continuously-acquired face images. For example, a predetermined face part (such as an eye, a region around the eye, a mouth, and lips) is extracted from the acquired face image, a corresponding face part is searched in different face images, and a moving destination is tracked.

The region of the tracking target may be the region corresponding to the face part included in the face, or a closed region having any shape. For example, the whole face may be set as the tracking target. In this case, a rectangle representing the whole face is set, and the tracking may be performed between the plurality of images.

The tracking target may be a feature point, and the plurality of tracking targets may be used.

The authentication unit performs the final authentication based on the pieces of information acquired from the user identification unit, the parameter acquisition unit, and the tracking unit. Specifically, in addition to the conventional processing of identifying the user based on the face image, the determination of the successful authentication is made when "the acquired face parameter satisfies the condition", and when "the extracted region is continuously tracked between the plurality of face images".

The description "the extracted region is continuously tracked" means that the region of the tracking target exist in the image region for all the target frames. That is, tracking unit fails to perform the tracking when the frame-out of the region of the tracking target is generated in the intermediate frame, or when a coordinate of the moving destination cannot be determined in the intermediate frame.

In the face authentication device, the face image acquisition unit may further acquire at least one intermediate face image between a time at which the first face image is acquired and a time at which the second face image is acquired, and the tracking unit may track the extracted region using the intermediate face image.

Thus, the tracking unit may track the region using the frame between the first face image and the second face image. For example, in the case where a frame rate of the face image acquisition unit is 30 FPS, the tracking may be performed every 1/30 seconds.

For example, a face image acquisition interval is 1 second or less, preferably 0.5 seconds or less, more preferably 0.2 seconds or less. The region of the tracking target is monitored while the face image acquisition interval is set shorter, the false authentication caused by such actions that the face photograph presented to the camera is replaced can be prevented.

In the face authentication device, the second face image may be formed by a plurality of face images acquired at different times, the parameter acquisition unit may further acquire a plurality of face parameters corresponding to the plurality of face images, and the authentication unit may make the determination of successful authentication when all the plurality of acquired face parameters satisfy the predetermined condition.

The plurality of second face images may be used, and the second face images may be associated with the plurality of face parameters, respectively. For example, the parameter indicating a degree of delight may be used for the first time, and the parameter indicating a degree of sadness may be used for the second time. Therefore, the security can be further enhanced in the authentication.

The face parameter may be a parameter in which the facial expression of the user is quantified, and the face parameter may be a parameter in which the face direction of the user is quantified.

Thus, the comparison can easily be performed by dealing with the face parameter as a numerical value. The face parameter may be a single value or a set (vector) of a plurality of values.

The authentication unit may further acquire an amount of change per unit time of the face parameter, and authentication processing may be interrupted when the amount of change is larger than a predetermined value.

The tracking unit may further acquire an amount of movement per unit time of a tracking target region, and a determination of failed authentication may be made when the amount of movement is larger than a predetermined value.

In the case where the face parameter changes rapidly, or in the case where the amount of movement per unit time is excessively large in the region of the tracking target, a determination of an unnatural state may be made to interrupt the authentication processing. Therefore, an impersonation attack with a plurality of previously-prepared face images (such as photographs) can be dealt with.

The authentication unit may interrupt the authentication processing when the authentication processing is not completed within a predetermined time.

In the case where the authentication processing is not completed within the predetermined time, it can be assumed that a person other than the authorized user tries the authentication. In such cases, preferably, the determination of the unnatural state may be made from the viewpoint of security to interrupt the authentication processing.

The tracking unit may track only a predetermined range existing near the extracted region when tracking the extracted region.

In the case where the target is the face of the human, it is hardly considered that the face moves rapidly in the image region. Therefore, the processing cost necessary for the tracking can be kept low only by setting the vicinity of the tracking target as the tracking range.

The present invention can be identified as a face authentication device including at least a part of the above units. The present invention can be identified as a face authentication method performed by the face authentication device. The present invention can be identified as a program that causes a computer to execute the face authentication method. As long as the technical inconsistency is not generated, the pieces of processing or the units can be implemented while freely combined.

In the present invention, the high-reliability face authentication can be performed at low processing cost.

### BRIEF DESCRIPTION OF THE DRAWINGS

Fig. 1 is a system configuration diagram of a face authentication device according to a first embodiment;
Fig. 2 illustrates an example of a face image at a person identification phase;
Fig. 3 illustrates an example of the face image at a facial expression determination phase;
Figs. 4A to 4C are views illustrating an example of tracking a tracking region;
Fig. 5 is a view illustrating a flowchart of face authentication processing in the first embodiment;
Figs. 6A to 6C illustrate an example of the face image in a second embodiment; and
Figs. 7A to 7C illustrate an example of the face image in a third embodiment.

### DETAILED DESCRIPTION

### FIRST EMBODIMENT

### (System configuration)

Hereinafter, a first exemplary embodiment of the present invention will be described with reference to the drawings.

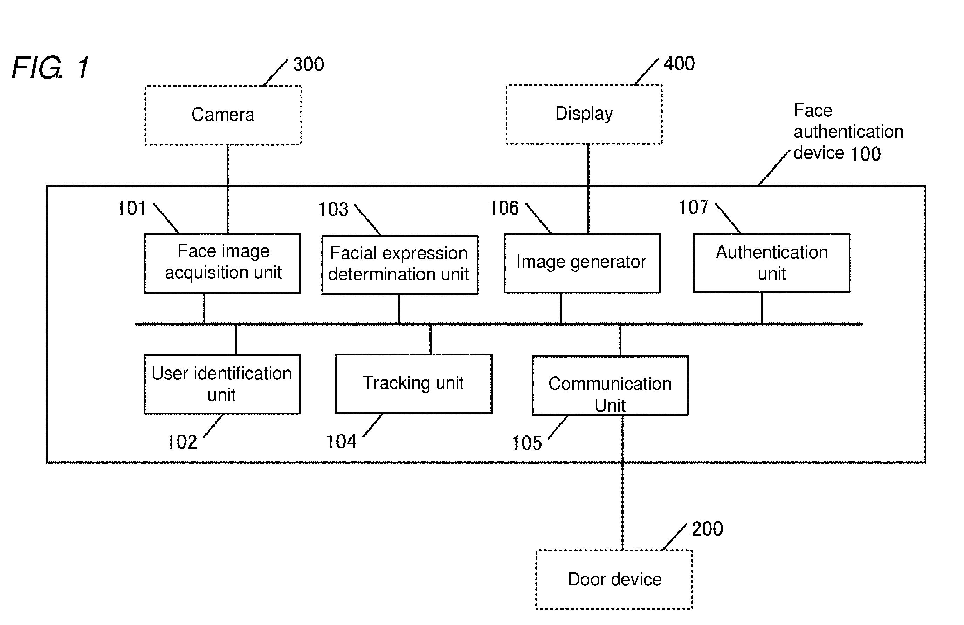

A face authentication device according to the first embodiment acquires an image (hereinafter, referred to as a face image) including a face of a person to be authenticated, and authenticates the person based on the face image. The face authentication device of the first embodiment is connected to a door device including an electromagnetic lock, and the face authentication device has a function of unlocking the door when authentication is successfully performed. Fig. 1 is a system configuration diagram of a face authentication device 100 of the first embodiment.

The face authentication device 100 includes a face image acquisition unit 101, a user identification unit 102, a facial expression determination unit 103, a tracking unit 104, a communication unit 105, an image generator 106, and an authentication unit 107.

The face image acquisition unit 101 acquires the face image from a camera 300 that is mounted so as to face a front side of the face authentication device 100. The face image acquisition unit 101 can continuously acquire the face image at a predetermined frame rate. The face image acquired by the face image acquisition unit 101 is supplied in real time to the user identification unit 102, the facial expression determination unit 103, and the tracking unit 104.

In the description of the embodiments, although the term "frame" is used in the meaning of one of the continuously-acquired face images, the frame is equivalent to the face image.

The user identification unit 102 detects the face included in the face image acquired by face image acquisition unit 101, and identifies the person based on the face. Specifically, a region corresponding to the face is extracted from the face image to acquire a feature amount of the face. The feature amount of the face is compared with a previously-stored feature amount, and the person is identified based on a degree of matching (degree of similarity) of the feature amount.

The facial expression determination unit 103 acquires a value (hereinafter, referred to as a face parameter) regarding a facial expression based on the face image acquired by the face image acquisition unit 101. The face parameter is a value indicating a degree of delight, anger, sadness, surprise, fear, dislike, blankness, or the like. Because a method for acquiring the degree of facial expression in terms of value is disclosed in, for example, JP 2006-115406 A, the detailed description is omitted.

The tracking unit 104 tracks a region (hereinafter, referred to as a tracking region) set in the face image among a plurality of face images acquired by the face image acquisition unit 101. The tracking region is a region corresponding to a face part (such as a nose and an eye) included in the face. In the first embodiment, it is assumed that the tracking region is the region including the right eye of the person to be authenticated.

The tracking unit 104 determines whether the tracking region can be tracked to the end or is lost in midstream among the plurality of input face images. The successful tracking throughout all the frames means that the face of the person to be authenticated exists continuously in a vision of the camera 300 while the plurality of face images are captured. The failed tracking means that the face of the person to be authenticated has moved out of the vision of the camera. Thus, in the first embodiment, the tracking unit 104 performs the tracking to check whether the face of the person to be authenticated exists continuously in the vision of the device during an authentication phase.

The communication unit 105 is an interface that conducts communication with an outside of the device. In the first embodiment, the door is unlocked by transmitting an unlocking signal to a door device 200 connected through wire.

The image generator 106 generates an image that is output to a display 400 arranged in parallel with the camera 300. The image generator 106 generates the image acquired by the face image acquisition unit 101 and the image including an instruction (for example, an instruction to make a specific facial expression) issued to the person to be authenticated, and provides the images to the person to be authenticated through the display 400.

The authentication unit 107 controls operations of the face image acquisition unit 101, the user identification unit 102, the facial expression determination unit 103, the tracking unit 104, the communication unit 105, and the image generator 106 to finally authenticate the person to be authenticated. The detailed processing content is described later.

The face image acquisition unit 101, the user identification unit 102, the facial expression determination unit 103, the tracking unit 104, the image generator 106, and the authentication unit 107 may be specifically-designed hardware or a software module. In the case where the face image acquisition unit 101, the user identification unit 102, the facial expression determination unit 103, the tracking unit 104, the image generator 106, and the authentication unit 107 are executed in the form of software, a program stored in an auxiliary storage device (not illustrated) is loaded on a main storage device (not illustrated), and executed by a CPU (not illustrated) to function as each unit.

### (Outline of authentication processing)

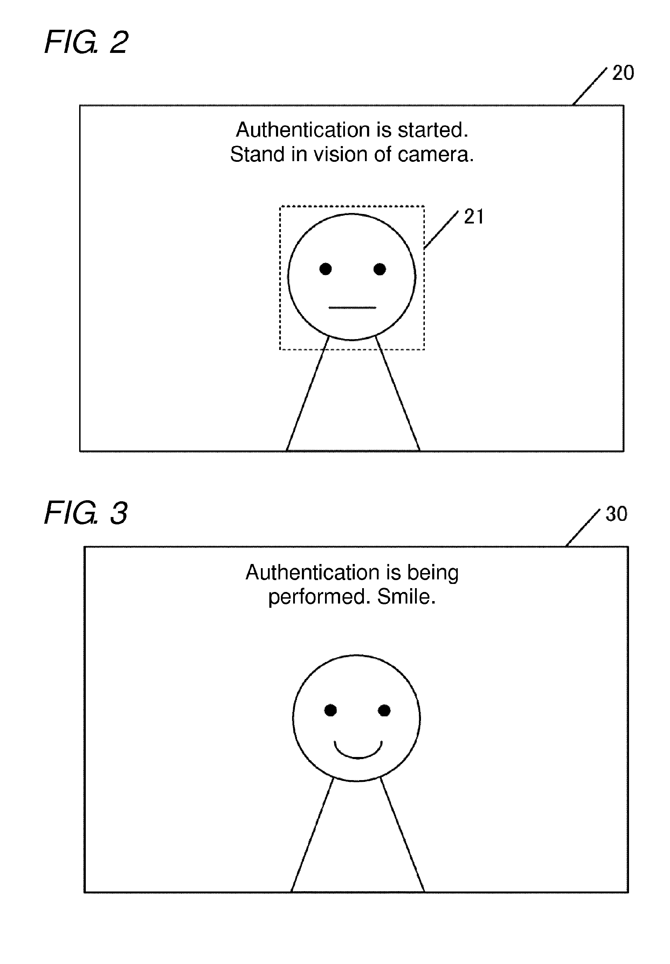

An outline of the authentication processing performed by the face authentication device 100 will be described below. An image 20 in Fig. 2 is generated by the image generator 106, and displayed on the display 400 during the authentication. The image includes the face image of the person to be authenticated, the face image being acquired by the face image acquisition unit 101.

The authentication processing performed by the face authentication device 100 can be divided into a phase to identify the person based on the face image and a phase to determine whether the facial expression of the person satisfies a predetermined condition.

### <Person identification phase>

The phase to identify the person phase based on the face image will be described. The phase described herein is referred to as a person identification phase. The user identification unit 102 performs the person identification phase by the following steps.

### (1) Detection of face region

When acquiring the face image from the face image acquisition unit 101, the user identification unit 102 detects the region including the face of the person (face region) from the face image. A face region 21 is detected in Fig. 2. For example, the face region can be detected by pattern matching in which texture information is used or template matching in which a template corresponding to a contour of the whole face is used. Alternatively, the template matching based on a face part constituting the face may be performed, or a region or points indicating a part of the face are extracted and the face region may be determined based on an extraction result. Alternatively, the face region may be determined by detecting a skin color region in the face image. Any well-known method may be adopted as processing of detecting the face region.

### (2) Arrangement of feature points

Then, the user identification unit 102 arranges a plurality of feature points on the detected face region. For example, the feature points are arranged based on positions of face parts (such as an eye, a nose, a nostril, a mouth, an eyebrow, a jaw, and a forehead) of the face. Therefore, the user identification unit 102 detects a target face part from the face region. The detection target face part may be previously set, or dynamically fixed.

The feature points are arranged based on the position of the detected face part. Preferably, the feature points are densely arranged as they get closer to the face part, and the feature points are coarsely arranged as they separate farther from the face part. In the feature point arranging method, different arranging method may be used according to age or sexuality of the person to be authenticated.

### (3) Acquisition of feature amount

Then, the feature amount is calculated based on the arranged feature points. The feature amount can be calculated based on a value obtained through filtering processing such as a Gabor filter.

### (4) Identification of person

Then, the person included in the face image is identified by comparing the acquired feature amount with the previously-stored feature amount. Because well-known methods may be adopted as the feature amount acquisition method and the comparison method, the detailed description is omitted.

In the first embodiment, the feature points are arranged after the face is detected, and the feature amount is calculated using the feature points. Alternatively, the person may be identified by another method. For example, the feature amount is directly calculated from the face region acquired from the above (1), and the person may be identified.

### <Facial expression determination phase>

The phase to determine whether the person to be authenticated makes a predetermined facial expression based on the face image will be described below. The phase described herein is referred to as a facial expression determination phase. In the first embodiment, the facial expression determination unit 103 acquires a face parameter, and makes the determination based on the face parameter. The face parameter is a value indicating a degree of a specific facial expression. In the first embodiment, it is a value indicating a degree of delight in a range of 0 to 100.

Only by performing the person identification phase as described above, even though the face included in the face image is identified as the face of the authorized person, it is difficult to determine whether the person actually exists in the vision of the camera. For example, a possibility that a person who tries impersonation (identity thief) holds a face photograph cannot completely be eliminated. Therefore, in the first embodiment, the facial expression determination unit 103 performs the following processing to further acquire the face parameter, and checks whether the person to be authenticated has made the facial expression satisfying the condition.

Similarly to the processing performed by the user identification unit 102, the facial expression determination unit 103 arranges the feature points in the face image to acquire the feature amount, thereby acquiring the face parameter. However, the acquired feature amount is not the feature amount identifying an individual person, but the feature amount identifying the facial expression.

The feature point arrangement method is also an arrangement method specific to the identification of the facial expression. For example, in the case where the individual person is authenticated, the feature points are arranged around the face part (such as eyes, a nose, and a mouth) where an individual difference is easily obtained. On the other hand, in the case where the face parameter is acquired, the feature points are arranged around the face part (such as eyes, an eyebrow, a cheek, a forehead, and lips) where a change in facial expression is easily obtained.

In the first embodiment, similarly to the identification of the person, the feature points are arranged, and the feature amount is calculated using the feature points. Alternatively, the face parameter may be acquired by another method. For example, the feature amount may be calculated directly from the acquired face region to acquire the face parameter.

The facial expression determination unit 103 calculates the face parameter by the comparison with the previously-stored feature amount in each facial expression. For example, in the case where the degree of matching (the degree of similarity) with the feature amount of the facial expression of previously-set "delight" is 85%, a face parameter of "delight: 85%" is calculated. Whether the calculated face parameter satisfies the previously-set condition is determined. For example, in the case where a condition of "delight ≥ 80%" is previously set, the determination is made that the condition is satisfied.

In the first embodiment, the value indicating "delight" is used as the face parameter. Alternatively, a value associated with another facial expression may be used as the face parameter. For example, the value indicating "anger", "sadness", "surprise", "fear", "dislike", or "blankness" may be used as the face parameter. Alternatively, the degree of matching with each of the plurality of facial expressions described above may be calculated, and a vector having the plurality of values may be output as the face parameter.

The facial expression determination phase described above is performed in succession to the person identification phase. For example, after the face image in the blankness state of Fig. 2 is acquired to identify the person, the person is encouraged to make a specific facial expression in Fig. 3, and the facial expression is determined.

### <Tracking region tracking processing>

The tracking processing performed by the tracking unit 104 will be described below.

Through the two phases described above, the individual person can be identified based on the face image, and whether the person to be authenticated makes the predetermined facial expression can be identified based on the acquired face parameter. That is, it can be assumed that the human, not the photograph, exists in the vision of the camera.

However, in the case where the identity thief holds a plurality of photographs having different facial expressions in front of the camera, the device may falsely recognize the identity thief as the authorized person. For this reason, in the face authentication device of the first embodiment, using the frames acquired between the face image used in the person identification phase and the face image used in the facial expression determination phase, whether continuity exists between the both is determined.

### This point will be described in detail.

In the case where the person to be authenticated actually exists in the vision of the camera, the face of the person is photographed in all the frames acquired between the face image used in the person identification phase and the face image used in the facial expression determination phase. On the other hand, in the case where the photograph or the like is used, frame-out of the face is generated when replacing the photograph.

After the person identification phase is started and until the facial expression determination phase is ended, the tracking unit 104 monitors the plurality of face images supplied from the face image acquisition unit 101, and determines whether the face of the person to be authenticated remains continuously in the image.

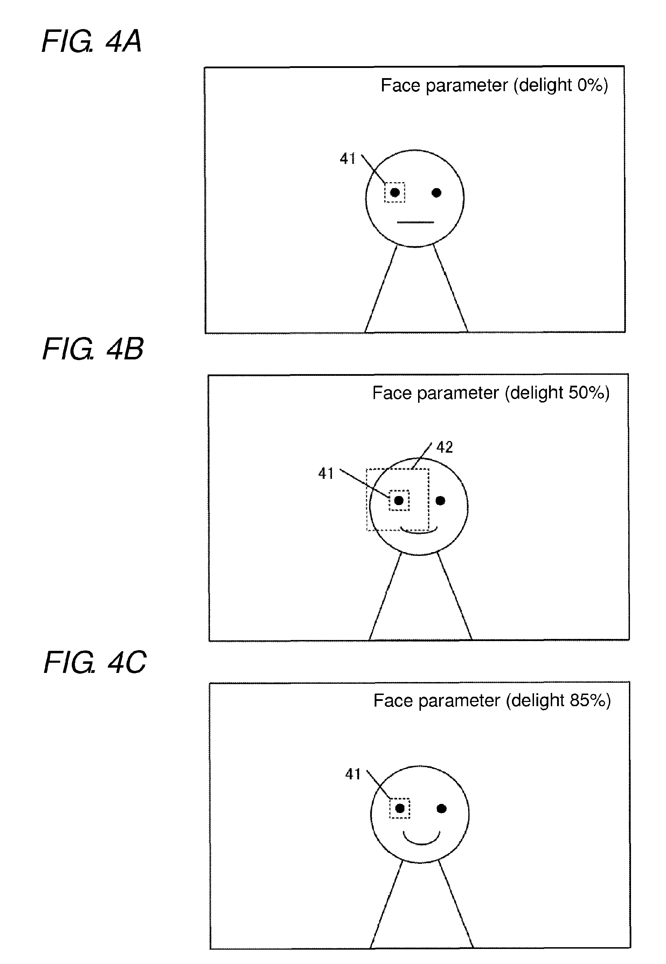

Figs. 4A to 4C are views illustrating processing performed by the tracking unit 104. Fig. 4A illustrates a face image (hereinafter, referred to as a first face image) acquired at the start of the person identification phase, Fig. 4C illustrates a face image (hereinafter, referred to as a second face image) acquired at the start of the facial expression determination phase. Fig. 4B illustrates a face image (hereinafter, referred to as an intermediate face image) acquired between the person identification phase and the facial expression determination phase. Because the person to be authenticated similes gradually in response to the instruction, the value of "delight" becomes a value between 0% and 85% in the face image of Fig. 4B.

When acquiring a first face image, the tracking unit 104 sets the tracking region into the image. The tracking region is a region where the presence of the face is tracked in the image. In the first embodiment, the tracking region is the rectangular region including the right eye of the person to be authenticated. The tracking unit 104 sets the tracking region after extracting the target face part (right eye).

The target face part can be extracted by the template matching in which the corresponding template is used. Alternatively, the position of the target face part may be determined based on the detected face region. Any well-known method may be adopted as processing of detecting the target face part. In the first embodiment, a tracking region 41 is set in Figs. 4A to 4C.

In the first embodiment, the region corresponding to the face part included in the face of the person to be authenticated is set as the tracking region. However, the tracking region is not limited to the region corresponding to the face part. For example, the region corresponding to the whole face (such as the rectangular region including the whole face) may be set as the tracking region.

The tracking unit 104 tracks the position of the set tracking region every time the face image is supplied from the face image acquisition unit 101. For example, in setting the tracking region, the corresponding image is cut out, and the template matching is performed with the image as the template. A predetermined range (for example, a range 42) around the position of the tracking region in the preceding frame may be set as a search range in performing the template matching. Therefore, search cost can be suppressed because it is hardly considered that the face of the person to be authenticated moves largely during the face authentication.

Finally, the tracking unit 104 continues the tracking until the facial expression determination phase is ended, and the tracking unit 104 makes the determination of "successful tracking" when the presence of the tracking region is checked in all the frames. The tracking unit 104 makes the determination of "failed tracking" when the tracking region is lost in a frame.

In the example of Figs. 4A to 4C, the determination of the successful tracking is made because the presence of the tracking region 41 can be checked in all the three face images. That is, in the case where all the three items are satisfied, namely,
(1) the face included in the face image is identified to be the face of the authorized person,
(2) the facial expression of the person satisfies the condition, and
(3) the tracking region is successfully tracked after the item (1) is started and until the item (2) is ended,
   the face authentication device of the first embodiment makes the determination of successful authentication to unlock the door device 200. In the case where any one of the three items is not satisfied, the door device 200 is not unlocked.

### <Processing flowchart>

A processing flowchart for performing the above processing will be described below.

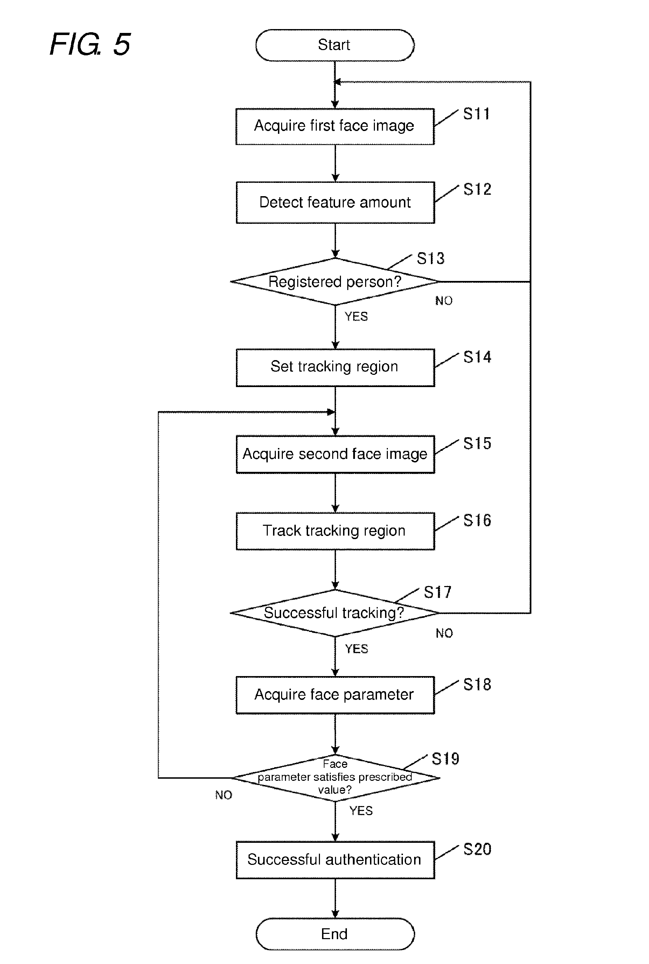

Fig. 5 is a flowchart illustrating the processing performed by the face authentication device 100 of the first embodiment. The flowchart in Fig. 5 is started when the person to be authenticated standing in the vision of the camera 300 is detected, and the authentication unit 107 controls the processing of the flowchart.

In Step S11, the user identification unit 102 acquires the face image (first face image) delivered from the face image acquisition unit 101.

In Step S12, the user identification unit 102 acquires the feature amount from the first face image through the above processing.

In Step S13, the acquired feature amount is compared with the feature amount, which is previously stored in the user identification unit 102 and corresponds to the faces of the plurality of persons, and the person is identified based on the degree of matching (degree of similarity). When the person is determined to be the registered person, the processing goes to Step S14. When the person is determined to be not the registered person, the person to be authenticated is informed that the person to be authenticated is not the registered person through the image generator 106, and the processing returns to Step S11.

In Step S14, the tracking unit 104 extracts the region corresponding to the right eye from the first face image delivered from the face image acquisition unit 101, and sets the region as the tracking region.

In Step S15, the facial expression determination unit 103 and the tracking unit 104 acquire a second face image delivered from the face image acquisition unit 101.

In Step S16, the tracking unit 104 tracks the tracking region by comparing the preceding frame with the frame acquired in Step S15. That is, whether the extracted right-eye region is included in both the frames is checked. When the tracking unit 104 successfully performs the tracking (YES in Step S17), the processing goes to Step S18. When the tracking unit 104 fails to perform the tracking (NO in Step S17), namely, when the right eye of the person to be authenticated is lost, the person to be authenticated is informed that the tracking unit 104 has failed to perform the tracking through the image generator 106, and the processing returns to Step S11.

In Step S18, the facial expression determination unit 103 acquires the feature amount from the second face image, and acquires the face parameter through the above processing.

In Step S19, the facial expression determination unit 103 determines whether the acquired face parameter satisfies a prescribed condition. For example, for the condition that the value of "delight" is greater than or equal to 80%, the value included in the face parameter is referred to, the determination that the condition is satisfied is made when the value of "delight" is greater than or equal to 80%, and the processing goes to Step S20. When the condition is not satisfied, the processing goes to Step S15 to continuously acquire the second face image.

Finally, in Step S20, the authentication unit 107 transmits an unlock command to the door device 200 through the communication unit 105, and the door is unlocked.

In the conventional face authentication device, the face authentication processing is performed once or a plurality of times to confirm authorization of the person to be authenticated, which results in the problem of the trade-off between the cost and the reliability. That is, in the one-time authentication, there is a risk that an unauthorized person passes the authentication. Additionally, the processing cost increases when the authentication is performed a plurality of times in order to prevent the unauthorized authentication.

On the other hand, the face authentication device of the first embodiment determines whether the facial expression satisfies the predetermined condition in addition to the usual face authentication processing. The local region is set into the face image to perform the tracking, thereby checking whether both the processing targets are the identical face. Therefore, unauthorized attempt using the photograph or the like can be eliminated. For example, even if the person other than a person in question tries to deceive the device using the face photograph, the face matched with the assigned face parameter cannot be provided by one face photograph. Even if at least two photographs are prepared, the device fails to perform the tracking because the frame-out of the currently-tracked region is generated in replacing the photograph.

Additionally, in the facial expression determination processing, high accuracy is not required as compared with the processing of identifying the individual person. That is, the high-reliability face authentication technique can be provided while the costly processing is suppressed to the minimum.

In the first embodiment, the determination of the failed tracking is made when the tracking region is completely lost. Alternatively, even if the tracking region can be tracked between the frames, the determination of the failed tracking may be made in the case where an amount of movement of the tracking region is larger than a predetermined threshold. This is because it can be assumed that the identity thief is attempting to replace the photograph when the tracking region moves unnaturally largely between the frames.

### SECOND EMBODIMENT

In the first embodiment, at the facial expression determination phase, the person to be authenticated is caused to make the assigned facial expression to determine the facial expression using the face parameter. On the other hand, in a second embodiment, the person to be authenticated is caused to make a plurality of facial expressions, and the determination of the successful authentication is made in the case where the plurality of facial expressions satisfy the conditions.

Because the configuration of the face authentication device of the second embodiment is similar to that of the first embodiment, the detailed description is omitted, and only a different point of the processing will be described below.

In the second embodiment, the pieces of processing in Steps S15 to S19 are repeated a plurality of times. For example, the person to be authenticated is caused to make the facial expression in each repetition such that the person to be authenticated smiles for the first time and such that the person to be authenticated make an angry face for the second time, and the facial expression determination unit 103 makes the determination.

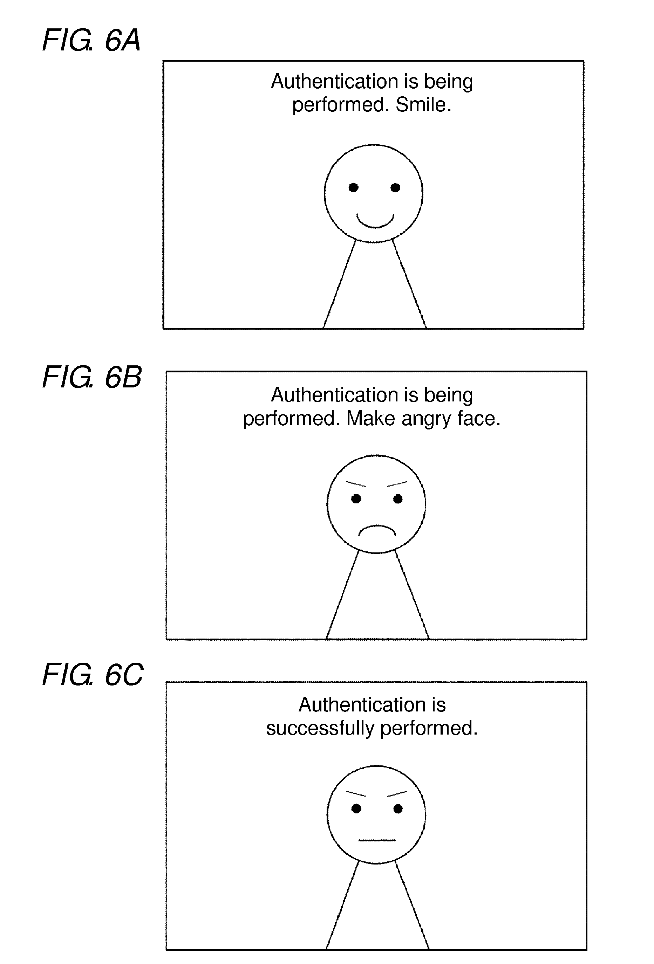

Figs. 6A to 6C illustrate an example of a screen presented to the person to be authenticated in the second embodiment. Fig. 6A illustrates a screen in the state where the person identification phase is completed. At this point, the instruction to smile is issued to the person to be authenticated, and the acquisition of the predetermined face parameter corresponding to "delight" is checked in Step S19. In the second loop, as illustrated in Fig. 6B, the instruction to make the angry face is issued to the person to be authenticated, and the acquisition of the predetermined face parameter corresponding to "anger" is checked in Step S19. Finally, the state of the successful authentication is obtained as illustrated in Fig. 6C.

The tracking operation performed by the tracking unit 104 is similar to that of the first embodiment. That is, the tracking region is continuously tracked between the frames until the facial expression determination phase is completed, and the authentication processing is interrupted in the case where the tracking region is lost.

In the second embodiment, the person to be authenticated is caused to make a plurality of assigned facial expressions, so that security can be further enhanced.

In the first and second embodiments, there is no time restriction in the authentication. However, the determination of the failed authentication may be made to interrupt the processing in the case where a predetermined time elapses after the authentication processing is started.

Alternatively, a degree of change of the face parameter is acquired in each frame, and the determination of the failed authentication may be made in the case where the amount of change of the face parameter is larger than a predetermined threshold. This is because it can be assumed that the identity thief is attempting to replace the photograph when the face parameter varies unnaturally largely between the frames.

In the second embodiment, by way of example, the person to be authenticated continuously makes the facial expression of "delight" and the facial expression of "anger". Alternatively, a combination of other facial expressions may be used. The facial expression to be used is randomly fixed from the plurality of facial expressions in each case, and the instruction may be issued to the person to be authenticated.

### THIRD EMBODIMENT

In the first and second embodiments, the facial expression determination unit 103 determines the facial expression of the person to be authenticated. On the other hand, in a third embodiment, a face direction of the person to be authenticated is determined instead of determining the facial expression.

In the third embodiment, the facial expression determination unit 103 is replaced with a face direction determination unit 108 (not illustrated) to determine the face direction of the person to be authenticated. In the third embodiment, the face parameter is not the parameter regarding the facial expression of the person to be authenticated but the parameter indicating the face direction of the person to be authenticated. For example, the face parameter of the third embodiment indicates vertical and horizontal angles in the case where the front face is set to 0 degrees. Because other configurations of the third embodiment are similar to those of the first embodiment, the detailed description is omitted, and only a different point of the processing will be described below.

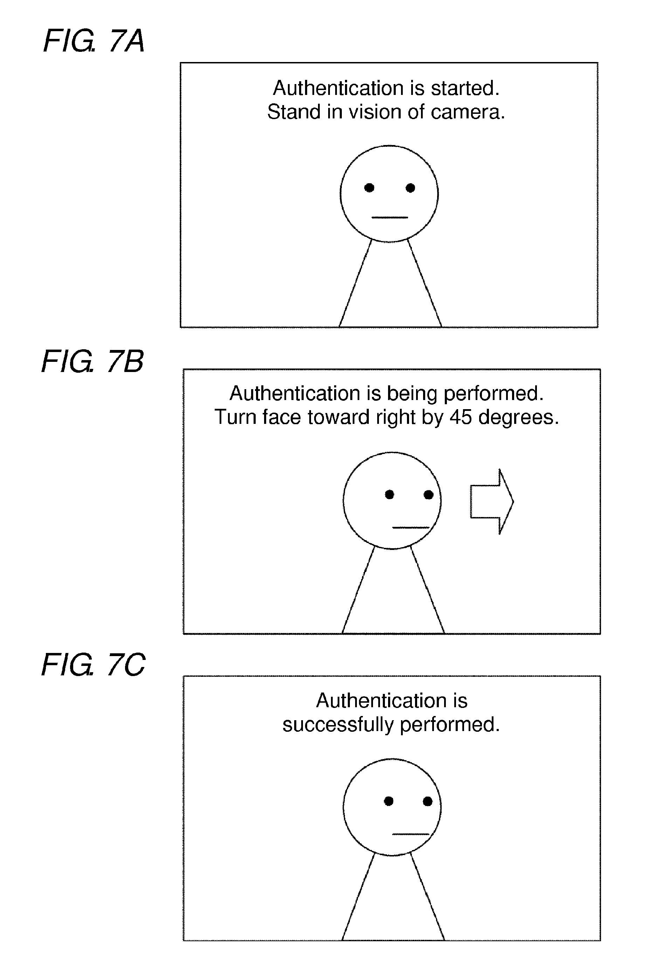

In the third embodiment, in Step S18, whether the face direction of the person to be authenticated is oriented toward a predetermined direction is determined instead of determining the facial expression of the person to be authenticated. For example, as illustrated in Figs. 7A to 7C, an instruction to turn the face toward the right by 45 degrees is issued to the person to be authenticated, and then, whether the face direction of the person to be authenticated falls within a predetermined range (for example, a range of 35 degrees to 55 degrees to the right) is determined.

The tracking operation performed by the tracking unit 104 is similar to that of the first embodiment. That is, the tracking region is continuously tracked between the frames until the facial expression determination phase is completed, and the authentication processing is interrupted in the case where the tracking region is lost. However, in the third embodiment, because the face direction of the person to be authenticated changes, preferably, the tracking region is set in consideration of the change of the face direction. For example, the tracking region may be set to a face part, such a nose, which is unlikely to get out of sight even if the face direction changes. The tracking region may be set to the region other than the face parts included in the face. For example, the tracking region may be set to the rectangular region including the whole face.

Generally, the face direction determination processing can be performed at lower cost than that of the processing of identifying the person or facial expression. Therefore, in the third embodiment, the overall processing cost can be reduced similarly to the first and second embodiments.

### MODIFICATIONS

The above embodiments are described only by way of example, and various changes can be made without departing from the scope of the present invention.

For example, in the embodiments, by way of example, the tracking region is tracked using the plurality of intermediate images. However, it is not always necessary to use the intermediate image.

Although the seven kinds of facial expressions (delight, anger, sadness, surprise, fear, dislike, and blankness) are illustrated in the embodiments, the face parameter associated with a facial expression other than the illustrated parameters may be used. For example, a face parameter indicating a degree of shutting of an eye, a direction of a line of sight, or a degree of opening of a mouth may be used.

In the embodiments, by way of example, the quantified facial expression and the quantified face direction are cited as an example of the face parameter. Alternatively, another parameter associated with an appearance of a user's face may be used.

In the first and second embodiments, by way of example, the instruction to make the specific facial expression is issued to the person to be authenticated. Alternatively, the specific instruction may not be issued in the case where the person to be authenticated previously understands which facial expression is to be made. For example, the instruction to make the specific facial expression such as "smile" and "anger" may not be issued, and the person to be authenticated may be informed only that the predetermined facial expression is checked. In such cases, the image may not be provided to the person to be authenticated. The person to be authenticated may be informed of the progress of the authentication step by a lamp or sound.

The person to be authenticated may not be informed at all until the authentication is successfully performed. In this manner, a hint may not be provided to a person other than the authorized person.

In the embodiments, the face image is acquired with the camera. Alternatively, any device other than the camera may be used as long as the face image is acquired. For example, the face image may be acquired from a remote place through a network.

In the embodiments, the face part included in the face is set as the tracking region. Alternatively, the tracking target may be other than the face part, or may be the feature point set in the face image. Any part may be set as the tracking target as long as the continuous presence of the face of the person to be authenticated can be checked.

## Claims

1. A face authentication device comprising:
a face image acquisition unit configured to continuously acquire face images of a user;
a user identification unit configured to identify the user based on a first face image acquired by the face image acquisition unit;
a parameter acquisition unit configured to acquire a face parameter based on a second face image acquired by the face image acquisition unit, the face parameter being a parameter associated with a facial expression or a face direction of the user;
a tracking unit configured to extract a region of a part of a face included in the first face image, and to track the region between the plurality of continuously-acquired face images; and
an authentication unit configured to make a determination of successful authentication when the user identified by the user identification unit is a registered user, when the acquired face parameter satisfies a predetermined condition, and when the extracted region is continuously tracked between the plurality of face images.

2. The face authentication device according to claim 1, wherein the face image acquisition unit further acquires at least one intermediate face image between a time at which the first face image is acquired and a time at which the second face image is acquired, and
the tracking unit tracks the extracted region using the intermediate face image.

3. The face authentication device according to claim 1 or 2, wherein the second face image is formed by a plurality of face images acquired at different times,
the parameter acquisition unit further acquires a plurality of face parameters corresponding to the plurality of face images, and
the authentication unit makes the determination of successful authentication when all the plurality of acquired face parameters satisfy the predetermined condition.

4. The face authentication device according to any one of claims 1 to 3, wherein the face parameter is a parameter in which the facial expression of the user is quantified.

5. The face authentication device according to any one of claims 1 to 3, wherein the face parameter is a parameter in which the face direction of the user is quantified.

6. The face authentication device according to any one of claims 1 to 5, wherein the authentication unit further acquires an amount of change per unit time of the face parameter, and authentication processing is interrupted when the amount of change is larger than a predetermined value.

7. The face authentication device according to any one of claims 1 to 6,
wherein the tracking unit further acquires an amount of movement per unit time of a tracking target region, and a determination of failed authentication is made when the amount of movement is larger than a predetermined value.

8. The face authentication device according to any one of claims 1 to 7, wherein the authentication unit interrupts the authentication processing when the authentication processing is not completed within a predetermined time.

9. The face authentication device according to any one of claims 1 to 8, wherein the tracking unit tracks only a predetermined range existing near the extracted region when tracking the extracted region.

10. A face authentication method performed by a face authentication device, the face authentication method comprising:
a face image acquiring step of continuously acquiring face images of a user;
a face authentication step of identifying the user based on an acquired first face image;
a parameter acquiring step of acquiring a face parameter based on an acquired second face image, the face parameter being a parameter associated with a facial expression or a face direction of the user;
a tracking step of extracting a region of a part of a face included in the first face image, and tracking the region between the plurality of continuously-acquired face images; and
an authentication step of making a determination of successful authentication when the user identified in the face authentication step is a registered user, when the acquired face parameter satisfies a predetermined condition, and when the extracted region is continuously tracked between the plurality of face images.

11. A program configured to cause a computer to execute each step of the face authentication method according to claim 10.
